# EUROPEAN PATENT APPLICATION

(11) **EP 3 095 968 A1**
(43) Date of publication of application: **23.11.2016**
(21) Application number: 16164626.0
(22) Date of filing: 11.04.2016
(51) Int. Cl.: F01D 15/10, F01D 25/28

(54) **SYSTEM AND METHOD FOR PROVIDING STRUCTURAL STABILITY TO MOBILE POWER PLANTS**

(30) Priority: 20.04.2015 US 201514691082
(71) Applicant: General Electric Company, Schenectady, NY 12345 (US)
(72) Inventor: SETHI, Vineet, Houston, TX Texas 77015 (US); ACOSTA, Michael Anthony, Housto, TX Texas 77015 (US)
(74) Representative: Lee, Brenda

(57) **Abstract**

A system includes a mobile power generation unit 10 configured to generate power. The system includes a structural stability system 34 configured to couple to the mobile power generation unit. The structural stability system is configured to maintain the mobile power generation unit in an upright position when overturning moments exceed the countering of dead loads.

## Description

### BACKGROUND

The subject matter disclosed herein relates to mobile power generation systems, and, more particularly, to a system and method to stabilize mobile power plants.

Typically, permanent power plants are built to provide power to customers connected to a power grid. However, there are a variety of reasons that the permanent power plant may not be able to meet the power demand of the customers. For example, in periods of intense growth, the demand by customers may increase to surpass the amount of power the permanent power plant can generate. In some cases, the permanent plant may be shut down or undergo equipment maintenance. As further example, natural disasters such as hurricanes and earthquakes can disrupt power for a portion of the customers.

Mobile power plants are transported to an environment to meet power demands of customers where permanent power plants may not be able to deliver power. For instance, the mobile power plant may be a trailer-mounted system that is transported by ship, air, or road to a location to meet customer demand within days (e.g., 5-20 days). While mobile power plants provide a great convenience, one of the major problems with mobile power plants is the ability to withstand harsh environments, such as high wind speeds and/or seismic activity. For example, in some parts of the world during hurricanes, wind speeds may be as high as 241 - 321 kilometers per hour (km/h) or higher. The high wind speeds can cause the mobile power plant to become unbalanced or otherwise lose stability, thereby disrupting power supplied to the customers. In some cases, seismic kits may be equipped to the base of the mobile power plant to increase the support for the plant during earthquakes or other seismic activity. However, seismic kits may not provide enough support and only withstand some amount (e.g., .65g or lower) of seismic activity. For the foregoing reasons, there is a need to address the problem of mobile power plants withstanding high wind speeds and seismic activity.

### BRIEF DESCRIPTION

Certain embodiments commensurate in scope with the present disclosure are summarized below. These embodiments are not intended to limit the scope of the disclosure, but rather these embodiments are intended only to provide a brief summary of possible forms of the disclosure. Indeed, the invention may encompass a variety of forms that may be similar to or different from the embodiments set forth below.

In a first embodiment, a system includes a mobile power generation unit configured to generate power, and a structural stability system configured to couple to the mobile power generation unit, wherein the structural stability system is configured to maintain the mobile power generation unit in an upright position when overturning moments exceed the countering of dead loads.

In a second embodiment, a system includes a structural stability system configured to couple to a mobile power generation unit, wherein the structural stability system is configured to maintain the mobile power generation unit in an upright position when overturning moments exceed the countering of dead loads, and the structural stability system comprises a damper system configured to bias the mobile power generation unit to a centered position.

In a third embodiment, a system includes a structural stability system configured to couple to a mobile power generation unit, wherein the structural stability system includes a damper system configured to bias the mobile power generation unit to a centered position, and the damper system includes a plurality of damper-column structures, each damper-column structure having a column disposed adjacent to the power generation unit that extends vertically relative to a longitudinal axis of the mobile power generation unit and a damper coupled to the column, and each damper including a first longitudinal end coupled to the column and a second longitudinal end configured to couple to the mobile power generation unit.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a diagram of a schematic view of an embodiment of a mobile power generation unit having a structural stability system;
FIG. 2 is a perspective view of an embodiment of the mobile power generation unit of

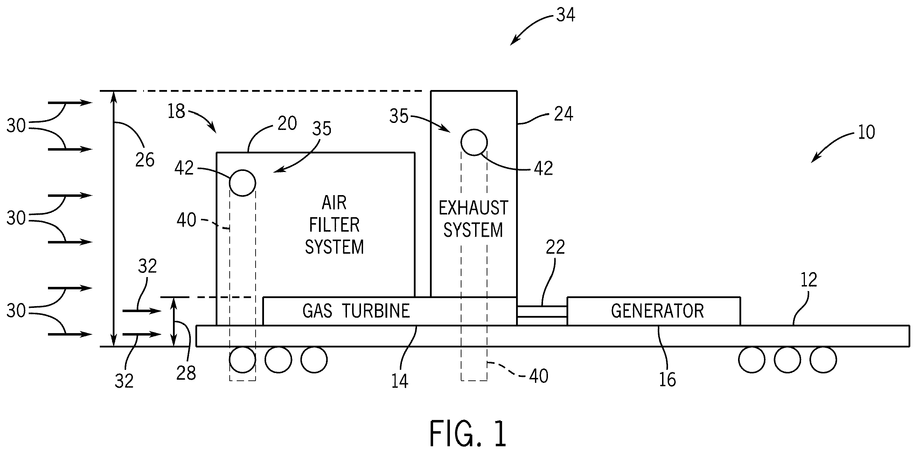

FIG. 1 with columns and dampers;

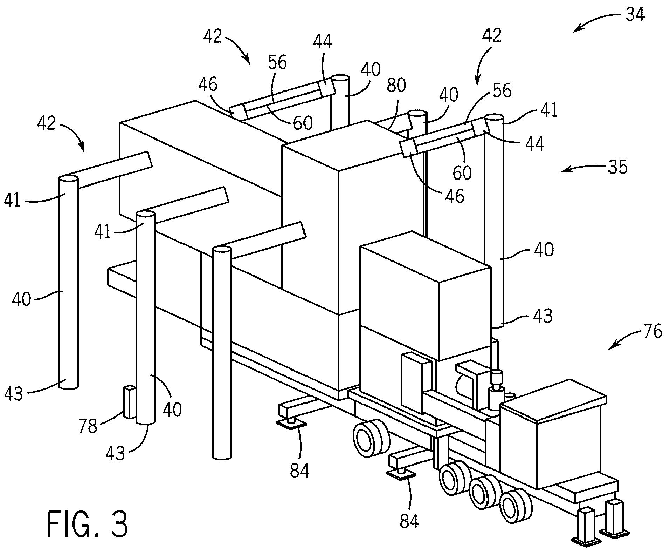

FIG. 3 is a perspective view of another embodiment of the mobile power generation unit of FIG. 1 with columns and dampers;

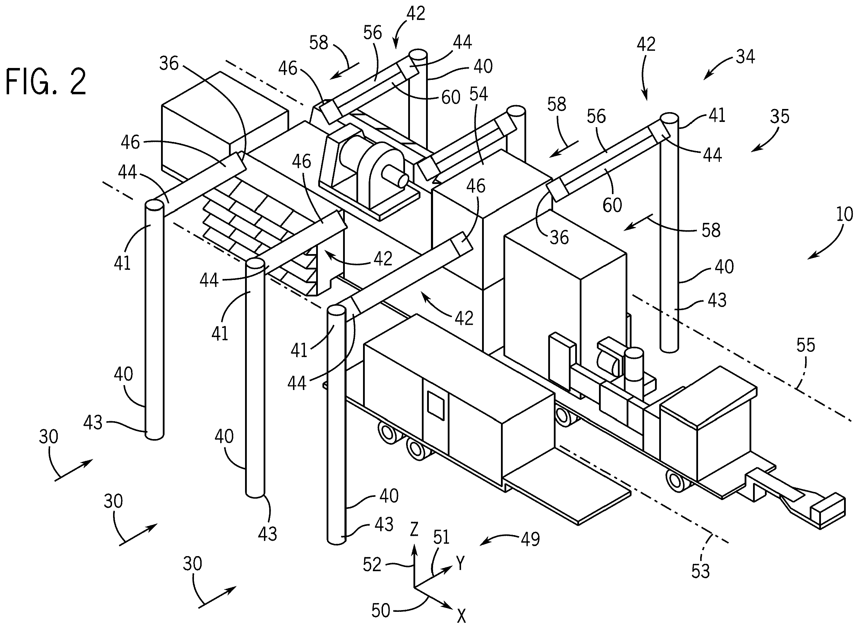

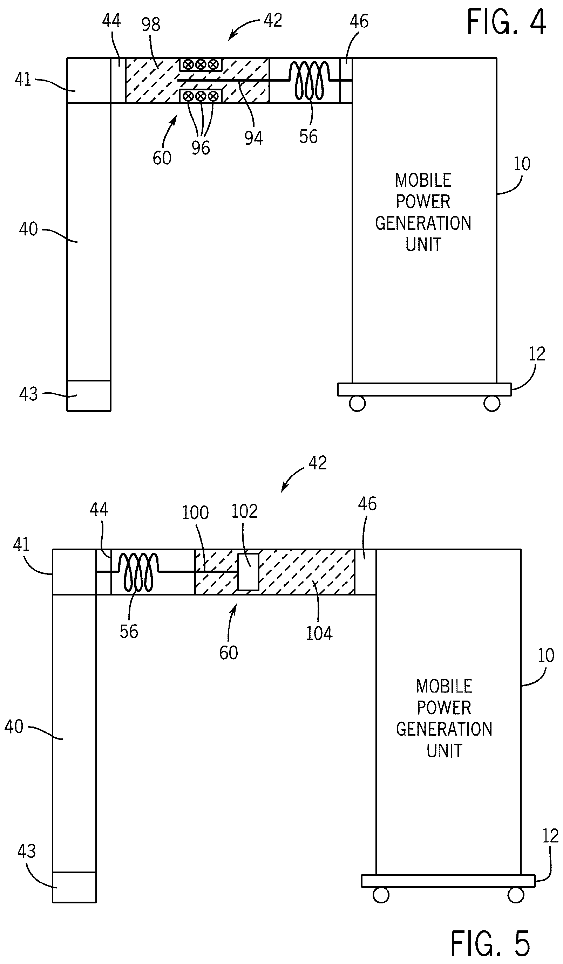

FIG. 4 is a diagram of a schematic view of an embodiment of the columns and dampers of the mobile power generation unit of FIGS. 2 and 3; and
FIG. 5 is a diagram of a schematic view of another embodiment of the columns and dampers of the mobile power generation unit of FIGS. 2 and 3.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Present embodiments are directed to a system and method that addresses the problem of withstanding high wind speeds and seismic activity by stabilizing a mobile power plant. The system may include a mobile power generation unit to generate power. The system may also include a damper to couple to a column on a first longitudinal end and the mobile power generation unit on a second longitudinal end. The damper stabilizes the mobile power generation unit by lessening an impact of forces on an exterior of the unit. For example, the damper may stabilize the mobile power generation unit from wind forces and/or seismic forces. With respect to wind forces, the damper may maintain the mobile power generation unit in an upright position in the presence of wind forces that exceed the overturning moment of the mobile power unit, as an example wind speeds greater than 120 kilometers per hour (km/h). With respect to seismic forces, the damper may be used to maintain the mobile power generation unit in an upright position in the presence of seismic activity. The damper may be used in conjunction with a seismic kit to further improve the seismic forces the mobile power generation unit can withstand.

Turning now to the drawings, FIG. 1 is an embodiment of a mobile power generation unit 10. As illustrated, the mobile power generation unit 10 includes a trailer 12, a gas turbine engine 14, and a generator 16. While the mobile power generation unit 10 of FIG. 1 includes a gas turbine engine 14, it is meant to be illustrative and any engine 14 or turbine suitable for power generation may be used. The power generation unit 10 may include one or more filtering systems 18. The filtering system 18 may include a housing 20 to enclose components of the filtering system in an enclosure. In an embodiment, the air filtering system 18 may provide air to the engine 14. The engine 14 may mix the air with fuel and combust an air-fuel mixture to drive one or more turbines of the power generation unit 10. As the turbine is driven, it rotates a shaft 22 coupled the engine 14. The generator 14 uses mechanical energy from the shaft 22 to generate electrical power to deliver to the power grid. The power generation unit 10 may further include one or more exhaust systems 20. The engine 14 may include an exhaust system 24 for venting exhaust gases from the power generation process (e.g., the combusted air-fuel mixture).

The mobile power generation unit 10 may include components at various heights. For instance, in FIG. 1, the air filter system 20 and the exhaust system 24 may be constructed at a taller height 26 (e.g., 3-15 meters) with respect to the ground or the trailer 12 than the height 28 of the engine 14 and/or the generator 16. The taller the structure, the more forces from wind 30 impact the power generation unit 10 than forces from wind 32 against a shorter structure. Traditionally, protection walls may be constructed to protect the power generation unit 10 from the wind forces described above. However, installing protection walls strong enough to withstand wind forces can be costly and/or difficult to build. In an embodiment, the mobile power generation unit 10 may be stabilized by using a structural stability system 34 to lessen the impact of the forces from the winds 30, 32 on the mobile power generation unit 10. The structural stability system 34 may include a damper systems 35 having columns 40 and/or dampers 42. The columns 40 may be disposed adjacent to the mobile power generation unit 10 and extend vertically relative to the longitudinal axis of the mobile power generation unit 10. One or more dampers 42 may be coupled to a respective column 40 to form a damper-column structure. As explained below, the dampers 42 may couple to the mobile power generation unit 10 at locations along a longitudinal axis of the mobile power generation unit 10 and to stabilize the mobile power generation unit 10.

FIG. 2 is a perspective view of a mobile power generation unit 10 having a structural stability system 34 to stabilize the mobile power generation unit 10 at a plurality of locations 36. The structural stability system 34 includes a damper system 35 having columns 40 coupled, via dampers 42, to the mobile power generation unit 10. The columns 40 may include a rubber material. In an embodiment, the columns 40 may include a damper coupling portion 41 and an anchor portion 43. The damper coupling portion 41 may be an upper portion (e.g., higher along the Z-axis 52) that is coupled to a longitudinal end 44 of the damper 42. The anchor portion 43, on the opposite end of the column 40, is configured to be anchored to the ground. In some embodiments, this anchor portion 43 engages with a pedestal 78 (as shown in FIG. 3) to support the column 40. Alternatively and/or additionally, the columns 40 may be partially buried to anchor the columns 40.

The dampers 42 are coupled to the columns 40 on a longitudinal end 44 and to the mobile power generation unit 10 on the other longitudinal end 46 of the damper 42. A clevis (e.g., shackle or U-bolt), fasteners, or any suitable device may couple the damper 42 to the location 36 on the mobile power generation unit 10, the column 40, or both. For example, the damper 42 may couple via a press-fit, snap fit, threadings, or the like. Further, the column 40, the location 36, or both may include a recess or fastener configured to secure the damper 42. As shown in FIG. 2, a three dimensional coordinate system 49 may include an X-axis 50, Y-axis 51, and Z-axis 52. The dampers 42 may extend in a radial direction (e.g., along the Y-axis 51) from a lateral side 53 of the mobile power generation 10 and/or extend parallel to the ground or the trailer 12. The columns 40 may be located parallel to the mobile power generation unit 12 and extend vertically (e.g., along the Z-axis 52) to align with the height 26 (as shown in FIG. 1) of components (e.g., filtering system 18, exhaust system 24, etc.) or a height of a point of attachment. On an opposite lateral side 55 of the mobile power generation unit 10, one or more opposing dampers 42 may be included. In an embodiment, there may be an opposing damper 42 on the opposite lateral side 55 for each damper 42 on the lateral side 53. For example, a pair of dampers 42 coupled to respective columns 40, as shown in FIG. 2, may extend from the filter house 54 to support the mobile power generation unit 12. While three pairs of dampers 42 are shown in FIG. 2, any number of pairs (e.g., 2, 3, 4, 5 or more) coupled to respective columns 40 may be utilized to improve stability of the mobile power generation unit 10. The longitudinal ends 46 of the plurality of dampers 42 are coupled at the plurality of locations 36 along a longitudinal axis (e.g., along the X-axis 50) of the power generation unit 10. The dampers 42 may be approximately evenly spaced apart, or located to align with the plurality of locations 36 on portions of the mobile power generation unit 10 taller (e.g., higher along the Z-axis 52) than the average height of the unit 10.

The dampers 42 may include a biasing portion 56, such as a spring element, to bias the mobile power generation unit 10 to a centered position (e.g., normal operating position) shown in FIG. 2. For instance, if the wind 30 is applying forces in the direction of wind 30 to the mobile power generation unit 10, the biasing portion 56 of the dampers 42 may apply a force 58 in the opposite direction (e.g., along the Y-axis 51) of the wind 30. That is, the dampers 42 lessen the impact of the winds 30 and/or reduce the acceleration of the mobile power generation unit 10 by biasing the mobile power generation 10 to the centered position (e.g., resisting displacement). As such, the dampers 42 enable the mobile power generation unit 10 to withstand greater deflection from the winds 30 than without dampers 42. Further, as wind speeds increase, the biasing portion 56 accommodates the stronger forces by resisting displacement.

The dampers 42 may include a damper portion 60 to reduce (i.e. dampen) the impact of forces, such as forces from wind 30 and/or seismic activity, on the exterior of the mobile power generation unit 10. For example, the damper portion 60 may include a magnetorheological fluid (MR fluid) or viscous damper that allow the damper 42 to lessen the impact of the external forces on the mobile power generation unit 10. For example, the forces from the wind 30 on the exterior of the mobile power generation unit 10 may be lessened by converting kinetic energy to heat. As such, the dampers 42 have a flexible structure that allows the mobile power unit 10 to withstand forces that a stiff structure would not.

FIG. 3 is an embodiment of another mobile power generation unit 76 coupled to columns 40 via dampers 42. The columns 40 of FIG. 3 may be anchored to the ground using a pedestal 78. That is, the pedestal 78 may insert into the anchor portion 43 to support the column 40. The pedestal 78 may include concrete or another hard material to support the columns 40 when forces impact the exterior of the mobile power generation unit 76. As mentioned above, the structural stability system 34 may be utilized with any suitable mobile power generation units 10, 76. Depending on the type of trailer and/or mobile power generation unit 10, 76, it may be beneficial to use a number of dampers other than the three pairs shown in FIGS. 2 and 3. For instance, in a smaller unit, it may be beneficial to use two pairs.

The dampers 42 may be used in conjunction with one or more seismic kits 84 to improve stability of the trailer 12. For example, with respect to seismic activity, a typical mobile power generation unit 10 may maintain stability until approximately .24 g. After coupling one or more seismic kits 84 to the power generation unit 10, the power generation unit 10 may maintain stability until approximately .65 g. By utilizing dampers 42 in conjunction with seismic kits 84, the power generation unit 10 may maintain stability greater than 0.65g, as an example approximately .75 g.

The structural stability system 34 may allow the mobile power generation unit 10 to maintain stability where overturning moments exceed the countering of dead loads (e.g., mobile power generation unit 10, trailer 12, etc.). For instance, winds 30 exert pressure that is applied to exposed surface on the mobile power generation unit 10. The pressure from the winds 30 is converted into forces. During high winds 30, the wind forces induce an overturning moment (e.g., when winds 30 exert pressure on the mobile power generation unit 10) on the trailer 12 units. This overturning moment may be converted into forces at the base (e.g., landing gears) of the trailer 12, which may cause an uplift and thereby destabilize (e.g., overturn) the mobile power generation unit 10. In some cases, if the dead load at the landing gears is less than the wind load uplift, then the trailer may be destabilized. In some units 10, if wind speeds exceed, for instance, 120 kilometers per hour (km/h) wind with or without one or more seismic kits, the dead load may be less than the wind load. That is, the mobile power generation unit may destabilize as the wind load (e.g., 120 km/h wind speeds converted to forces) exceeds the dead load. With dampers 42, stability may be maintained above 241 km/h (preferably above 321 km/h or 354 km/h). Bear in mind, these numbers are merely examples meant to explain how dampers 42 can improve the stability of the mobile power generation unit 10.

FIG. 4 is a schematic view of an embodiment of a damper 42. The damper 42 may include a biasing portion 56, such as a return spring, on the longitudinal end 46 coupled to the mobile power generation unit 10. The biasing portion 56 may be coupled to a piston 94 of the damper portion 60. The damper portion 60 may further include electromagnetic coil 96 of wire. The electromagnetic coil 96 may be used to control the MR fluid 98. By using an MR damper 42, as shown in FIG. 4, the damping characteristics may be controlled by characteristics of power through the electromagnetic coil 96.

FIG. 5 is a schematic view of another embodiment of a damper 42. The damper 42 includes a biasing portion 56 on the longitudinal end 44 coupled to the column 40. While the biasing portion 56 and the damper portion 60 are arranged in the orientations as shown in FIGS. 4 and 5, any suitable orientation may be utilized to better maintain the mobile power generation unit in an upright position. The biasing portion acts to center the mobile power generation unit 10 by resisting displacement from the centered location. As mentioned above, the damper portion 60 may be a viscous damper (e.g., dashpot). The viscous damper may utilize a piston 100 coupled to a piston head 102 with orifices (e.g., porous apertures) to reduce motion of the mobile power generation unit 10 by converting movement from winds or seismic activity into friction between the piston head 102 and a fluid 104, such as silicone oil.

This written description uses examples to disclose the invention, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system, comprising:
   a mobile power generation unit configured to generate power; and
   a structural stability system configured to couple to the mobile power generation unit, wherein the structural stability system is configured to maintain the mobile power generation unit in an upright position when overturning moments exceed the countering of dead loads.
2. The system of clause 1, wherein the structural stability system comprises a damper system configured to bias the mobile power generation unit to a centered position.
3. The system of any preceding clause, wherein the damper system comprises a plurality of dampers configured to couple to the mobile power generation unit at a plurality of locations along a longitudinal axis of the mobile power generation unit and to stabilize the mobile power generation unit.
4. The system of any preceding clause, wherein the damper system comprises a plurality of columns disposed adjacent to the mobile power generation unit and extending vertically relative to the longitudinal axis of the mobile power generation unit, wherein each damper of the plurality of dampers is coupled to a respective column of the plurality of columns to form a damper-column structure.
5. The system of any preceding clause, wherein each damper of the plurality of dampers comprises a first longitudinal end coupled to the respective column of the plurality of columns and a second longitudinal end configured to coupled to the power generation unit, and each damper of the plurality of dampers extends from the respective column of the plurality of dampers in a direction crosswise to both a longitudinal length of the respective column and the longitudinal axis of the mobile power generation unit.
6. The system of any preceding clause, wherein the damper system comprises a pair of damper-column structures, wherein a first damper-column structure of the pair of damper-column structures is configured to couple to a first side of the mobile power generation and a second damper-column structure of the pair of damper-column structures is configured to couple a second side of the mobile power generation unit disposed opposite the first side.
7. The system of any preceding clause, wherein the pair of damper-column structures is aligned along an axial point of the longitudinal axis of the mobile power generation unit.
8. The system of any preceding clause, wherein the damper system comprises at least two pairs of damper-column structures, wherein each pair of damper-column structures of the at least two pairs of damper-column structures is aligned along a different axial point of the longitudinal axis of the mobile power generation unit.
9. The system of any preceding clause, wherein the structural stability system is configured to maintain the mobile power generation unit in an upright position in the presence of winds blowing at speeds greater than the overturing moment of the unit.
10. The system of any preceding clause, wherein each damper of the plurality of dampers comprises a magnetorheological damper, a viscous damper, or any combination thereof.
11. The system of any preceding clause, wherein the structural stability system comprises at least one seismic kit configured to couple to the mobile power generation unit to maintain stability of the mobile power generation unit in the presence of seismic activity.
12. The system of any preceding clause, wherein the structural stability system is configured to maintain the mobile power generation unit in an upright position in the presence of winds blowing at greater than 241.4 km/h.
13. The system of any preceding clause, wherein the structural stability system is configured to maintain the mobile power generation unit in an upright position in the presence of winds blowing at greater than 321.9 km/h.
14. The system of any preceding clause, wherein the structural stability system is configured to maintain stability of the mobile power generation unit for seismic loads of greater than 0.75 g.
15. The system of any preceding clause, wherein the mobile power generation unit comprises a gas turbine.
16. A system, comprising:
   a structural stability system configured to couple to a mobile power generation unit, wherein the structural stability system is configured to maintain the mobile power generation unit in an upright position when overturning moments exceed the countering of dead loads, and the structural stability system comprises a damper system configured to bias the mobile power generation unit to a centered position.
17. The system of any preceding clause, wherein the damper system comprises a plurality of damper-column structures, each damper-column structure comprises a column disposed adjacent to the power generation unit that extends vertically relative to a longitudinal axis of the mobile power generation unit and a damper coupled to the column, and each damper comprises a first longitudinal end coupled to the column and a second longitudinal end configured to couple to the mobile power generation unit.
18. The system of any preceding clause, wherein each damper of the plurality of damper-column structures is configured to extend from a respective column in a direction crosswise to both a longitudinal length of the respective column and the longitudinal axis of the mobile power generation unit.
19. The system of any preceding clause, wherein the plurality of damper-column structures comprises at least two pairs of damper-column structures, and each pair of the at least two pairs of damper-column structures is aligned along a different axial point of the longitudinal axis of the mobile generation unit.
20. A system, comprising:
   a structural stability system configured to couple to a mobile power generation unit, wherein the structural stability system comprises a damper system configured to bias the mobile power generation unit to a centered position, and the damper system comprises a plurality of damper-column structures, each damper-column structure comprises a column disposed adjacent to the power generation unit that extends vertically relative to a longitudinal axis of the mobile power generation unit and a damper coupled to the column, and each damper comprises a first longitudinal end coupled to the column and a second longitudinal end configured to couple to the mobile power generation unit.

## Claims

1. A system, comprising:
a mobile power generation unit configured to generate power; and
a structural stability system configured to couple to the mobile power generation unit, wherein the structural stability system is configured to maintain the mobile power generation unit in an upright position when overturning moments exceed the countering of dead loads.

2. The system of claim 1, wherein the structural stability system comprises a damper system configured to bias the mobile power generation unit to a centered position.

3. The system of claim 2, wherein the damper system comprises a plurality of dampers configured to couple to the mobile power generation unit at a plurality of locations along a longitudinal axis of the mobile power generation unit and to stabilize the mobile power generation unit.

4. The system of claim 3, wherein the damper system comprises a plurality of columns disposed adjacent to the mobile power generation unit and extending vertically relative to the longitudinal axis of the mobile power generation unit, wherein each damper of the plurality of dampers is coupled to a respective column of the plurality of columns to form a damper-column structure.

5. The system of claim 4, wherein each damper of the plurality of dampers comprises a first longitudinal end coupled to the respective column of the plurality of columns and a second longitudinal end configured to coupled to the power generation unit, and each damper of the plurality of dampers extends from the respective column of the plurality of dampers in a direction crosswise to both a longitudinal length of the respective column and the longitudinal axis of the mobile power generation unit.

6. The system of claim 5, wherein the damper system comprises a pair of damper-column structures, wherein a first damper-column structure of the pair of damper-column structures is configured to couple to a first side of the mobile power generation and a second damper-column structure of the pair of damper-column structures is configured to couple a second side of the mobile power generation unit disposed opposite the first side.

7. The system of claim 6, wherein the pair of damper-column structures is aligned along an axial point of the longitudinal axis of the mobile power generation unit.

8. The system of claim 6 or 7, wherein the damper system comprises at least two pairs of damper-column structures, wherein each pair of damper-column structures of the at least two pairs of damper-column structures is aligned along a different axial point of the longitudinal axis of the mobile power generation unit.

9. The system of claim 3, wherein each damper of the plurality of dampers comprises a magnetorheological damper, a viscous damper, or any combination thereof.

10. The system of claim 2, wherein the structural stability system comprises at least one seismic kit configured to couple to the mobile power generation unit to maintain stability of the mobile power generation unit in the presence of seismic activity.

11. The system of claim 1, wherein the mobile power generation unit comprises a gas turbine.

12. A system, comprising:
a structural stability system configured to couple to a mobile power generation unit, wherein the structural stability system is configured to maintain the mobile power generation unit in an upright position when overturning moments exceed the countering of dead loads, and the structural stability system comprises a damper system configured to bias the mobile power generation unit to a centered position.

13. The system of claim 12, wherein the damper system comprises a plurality of damper-column structures, each damper-column structure comprises a column disposed adjacent to the power generation unit that extends vertically relative to a longitudinal axis of the mobile power generation unit and a damper coupled to the column, and each damper comprises a first longitudinal end coupled to the column and a second longitudinal end configured to couple to the mobile power generation unit.

14. The system of claim 13, wherein each damper of the plurality of damper-column structures is configured to extend from a respective column in a direction crosswise to both a longitudinal length of the respective column and the longitudinal axis of the mobile power generation unit.

15. The system of claim 14, wherein the plurality of damper-column structures comprises at least two pairs of damper-column structures, and each pair of the at least two pairs of damper-column structures is aligned along a different axial point of the longitudinal axis of the mobile generation unit.
